# EUROPÄISCHE PATENTSCHRIFT

(11) **EP 2 455 181 B1**
(45) Veröffentlichungstag und Bekanntmachung des Hinweises auf die Patenterteilung: **06.03.2013**
(21) Anmeldenummer: 11008894.5
(22) Anmeldetag: 08.11.2011
(51) Int. Cl.: B23P 6/04, B08B 7/00, B29C 73/10, F01D 25/24

(54) **Reparaturverfahren eines sandwichartigen Bauteils**
Repair method of a sandwich-type component
Procédé de réparation d'un composant de type sandwich

(30) Priorität: 18.11.2010 DE 102010051842
(43) Veröffentlichungstag der Anmeldung: 23.05.2012
(73) Patentinhaber: Rolls-Royce Deutschland & Co. KG, 158257 Blankenfelde-Mahlow (DE)
(72) Erfinder: Dupré, Jürgen, 15711 Zeesen (DE)
(74) Vertreter: Weber, Joachim

(56) Entgegenhaltungen:
- EP-A1- 1 747 836
- EP-A1- 1 870 228
- EP-A2- 1 972 429
- DE-A1- 10 005 874
- DE-A1- 10 248 093
- DE-A1-102007 022 134
- US-A1- 2004 074 883

## Beschreibung

Die Erfindung bezieht sich auf ein Reparaturverfahren für ein sandwichartiges Bauteil, insbesondere ein sandwichartiges Bauteil mit einer dünnwandigen Wandung, welche beispielsweise aus Titan gefertigt sein kann und welche mit einer Wabenstruktur verklebt ist.

Ein Mantel- bzw. Nebenstromgehäuse eines Gasturbinentriebwerks ist üblicherweise aus mehreren Teilen zusammengefügt, beispielsweise Schmiederingen für den vorderen und den hinteren Flansch, sowie ein zwischen den Schmiederingen angeordnetes Frästeil aus Titan. Zur Reduzierung von Schallemissionen ist auf der Innenseite eine Wabenstruktur angeordnet, welche durch eine perforierte Deckschicht geschlossen wird. Die Wabenstruktur und die Deckschicht sind somit sandwichartig mit der Wandung verbunden, wobei die Verbindung durch ein Epoxidharz erfolgt.

Durch unterschiedliche Ereignisse kann es zu einer Beschädigung der Deckschicht und/oder der Wabenstruktur kommen. Hierdurch wird eine lokale Reparatur erforderlich gemacht.

Bis zu einer bestimmten Größe des beschädigten Bereichs kann dieser mit Hilfe einer Reparaturmasse aufgefüllt werden, beispielsweise einer Zweikomponentenmasse (Blue Filler). Dabei wird die Kontur wieder entsprechend angepasst.

Durch eine derartige Reparatur wird die Funktionsschicht der Deckschicht bzw. der Wabenstruktur hinsichtlich der Schallemissionen begrenzt. Somit ist die Gesamtfläche, welche auf diese Art repariert werden kann, erheblich eingeschränkt.

Ab einer bestimmten Größe des beschädigten Bereichs ist ein Austausch bzw. ein Ersatz des betroffenen Bereichs erforderlich. Hierzu ist es erforderlich, die Deckschicht und/oder die Wabenstruktur zu entfernen und zu ersetzen. Ein derartiger Vorgang erfordert jedoch das restlose Entfernen sowohl der Deckschicht und der Wabenstruktur, als auch der aus Epoxidharz bestehenden Klebeschicht.

Das Entfernen insbesondere der Klebeschicht wird gemäß dem Stand der Technik mechanisch mittels eines Schabers vorgenommen. Hierbei ergibt sich jedoch ein hohes Risiko einer irreparablen Beschädigung der Wand, insbesondere, da diese eine sehr geringe Wandstärke aufweisen kann, beispielsweise lokal nur 0,2 mm dick ist.

Eine chemische Entfernung der Klebeschicht ist ebenfalls nachteilig, da eine Begrenzung des zu reparierenden Bereichs durch die Ausbreitung des Lösungsmittels nicht oder nur ungenügend möglich ist. Somit besteht die Gefahr, dass angrenzende Bereiche der Klebeschicht ebenfalls angelöst und/oder entfernt werden.

Weiterhin ist es bei den aus dem Stand der Technik bekannten Vorgehensweisen nicht möglich, Risse in der Wandung zu reparieren. Dies betrifft insbesondere Risse im Bereich der Flansche. Dabei ist auch zu berücksichtigen, dass die Wandung sehr starke Wandstärkensprünge mit sehr dünnwandigen Bereichen von beispielsweise 0,2 mm bis relativ dickwandigen Bereichen aufweisen kann.

Die als Reparaturmöglichkeit gemäß dem Stand der Technik vorliegende Lösung sieht somit einen Austausch entweder des gesamten Bauteils oder eines Teils der Wandung vor. Dies erweist sich als sehr kostenintensiv.

Aus der EP 1 870 228 A1, die dem nächtliegende Stand der Technik entspricht, ist ein Reparaturverfahren für Wabenstrukturen von Gasturbinen vorbekannt, bei welchem in einem ersten Arbeitsschritt die Deckschicht und die Wabenstruktur in einem zu reparierenden Bereich mechanisch entfernt werden und bei welchem nachfolgend ein vorgefertigtes Ersatzstück eingeklebt wird. Die Entfernung des beschädigten Bereichs erfolgt mittels eines Fräs- und/oder Schleifverfahrens. Dabei wird die Wandung der Oberfläche, auf welcher die Wabenstruktur befestigt ist, ebenfalls mechanisch gereinigt und vorbereitet.

Ein weiteres Reparaturverfahren ist aus der EP 1 972 429 A2 vorbekannt. Auch hierbei wird ein beschädigter Teil der Wabenstruktur mechanisch entfernt und durch ein Reparaturstück ersetzt.

Der Erfindung liegt die Aufgabe zugrunde, ein Reparaturverfahren der eingangs genannten Art zu schaffen, welches bei einfachem Aufbau und einfacher, kostengünstiger Durchführbarkeit eine zuverlässige Reparatur ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass in einem ersten Arbeitsschritt die Deckschicht und die Wabenstruktur in einem zu reparierenden Bereich mechanisch entfernt werden. Die mechanische Entfernung kann dabei entweder die gesamte Wabenstruktur umfassen. Es kann jedoch auch ein wandungsnaher Bereich der Wabenstruktur bestehen bieiben.

Nachfolgend wird erfindungsgemäß mittels eines Laserstrahls die Epoxidharzschicht, welche zur Verklebung der Wabenstruktur mit der Wandung gedient hat, entfernt. Die durch den Laserstrahl aufgebrachte Energie entfernt das Epoxidharz restlos und zuverlässig, dieses wird durch die lokal aufgebrachte Energie "verdampft". Sollten sich zu diesem Arbeitsschritt noch Reste der Wabenstruktur an dem zu reinigenden Bereich befinden, so werden diese gelöst und können ebenfalls entfernt werden.

Nachfolgend wird erfindungsgemäß in einem weiteren Arbeitsschritt ein vorgefertigtes Ersatzstück passgenau eingesetzt und verklebt.

Erfindungsgemäß ist es somit möglich, geometrisch exakt vorbestimmte Bereiche des sandwichartigen Aufbaus auszutauschen, ohne dass die Gefahr besteht, dass die Wandung selbst beschädigt wird.

Erfindungsgemäß ist es weiter vorgesehen, dass nach Reinigung der Oberfläche der Wandung zumindest ein in der Wandung befindlicher Riss mittels eines Laserstrahls geschlossen wird. Somit kann, gegebenenfalls durch dieselbe Vorrichtung, ein Verschweißen des zumindest einen Risses erfolgen. Dieses Schließen oder Verschweißen des zumindest einen Risses erfolgt erfindungsgemäß mittels eines Schweißzusatzwerkstoffs.

Erfindungsgemäß wird der Bereich der Wandung nach dem Schließen des zumindest einen Risses nachfolgend wärmebehandelt. Dies erfolgt erfindungsgemäß durch eine Laserstrahlquelle, welche defokussiert ist und somit zur Wärmebehandlung eingesetzt werden kann.

Es ergibt sich somit der Vorteil, dass beschädigte Bereiche der schallreduzierenden sandwichartigen Anordnung kostengünstig so wiederhergestellt werden können, dass die Schallreduzierungsfunktion erhalten bleibt und dass eine Beschädigung der Wandung ausgeschlossen ist.

In bevorzugter Weise wird das erfindungsgemäße Verfahren mittels einer NC-gesteuerten Maschine durchgeführt, so dass eine exakte Reparatur innerhalb geometrisch vorbestimmter Bereiche so durchgeführt werden kann, dass ein passgenau gefertigtes Einsatzstück in den zu reparierenden Bereich eingesetzt werden kann.

Im Folgenden wird die Erfindung anhand eines Ausführungsbeispiels in Verbindung mit der Zeichnung beschrieben. Dabei zeigt:
- Fig. 1: zeigt eine schematische Darstellung eines Gasturbinentriebwerks gemäß der vorliegenden Erfindung,
- Fig. 2: eine perspektivische Ansicht eines Mantel- bzw. Nebenstromgehäuses,
- Fig. 3: eine vergrößerte Darstellung gemäß Pfeil A von Fig. 2,
- Fig. 4: eine schematische Teil-Darstellung des Mantel-/Nebenstromgehäuses mit beschädigter Deckschicht,
- Fig. 5: eine Ansicht, analog Fig. 4, mit entfernter Deckschicht und Wabenstruktur,
- Fig. 6: eine vergrößerte Detailansicht gemäß Fig. 5,
- Fig. 7: eine Ansicht, analog den Fig. 4 und 5, mit repariertem, beschädigtem Bereich,
- Fig. 8: eine vergrößerte Detailansicht gemäß Fig. 7,
- Fig. 9: eine Ansicht, analog Fig. 5, mit Riss in der Wandung,
- Fig. 10: eine vergrößerte Detailansicht gemäß Fig. 9,
- Fig. 11: eine Ansicht, analog Fig. 9, mit repariertem Riss,
- Fig. 12: eine vergrößerte Detailansicht gemäß Fig. 11,
- Fig. 13: eine Teil-Schnittansicht, analog den Fig. 6 und 10, und
- Fig. 14: eine Ansicht, analog Fig. 13, im reparierten Zustand, entsprechend Fig. 8.

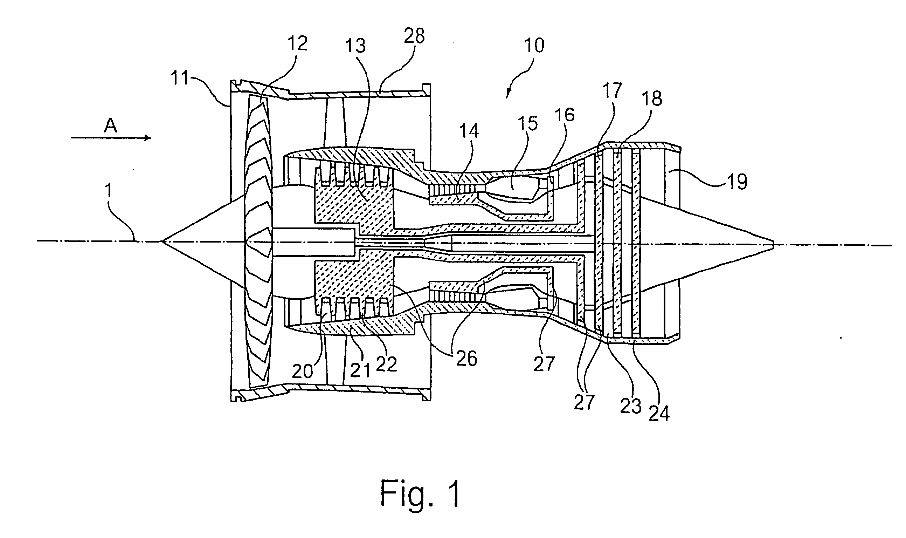

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

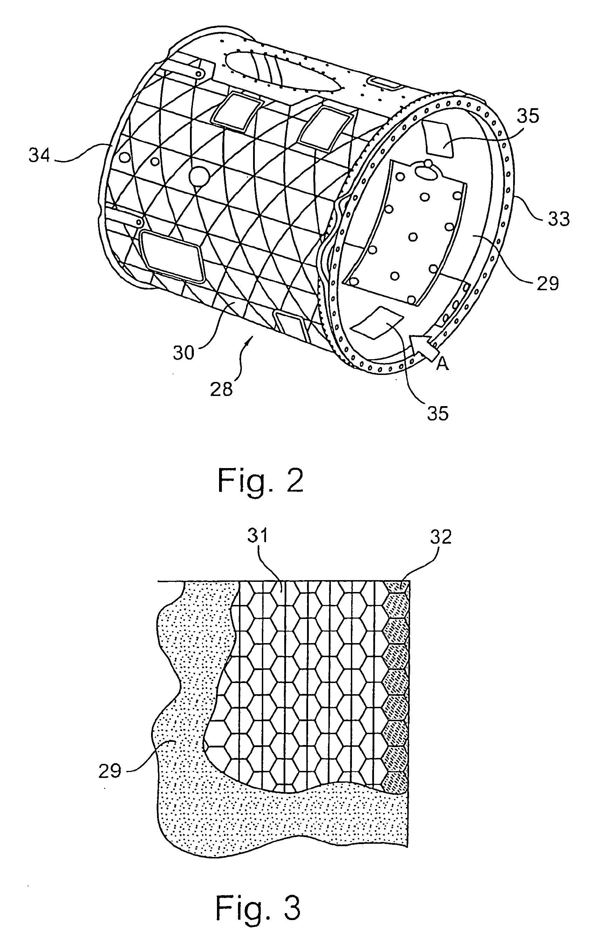

Die Fig. 2 zeigt eine perspektivische, vergrößerte Darstellung eines Ausführungsbeispiels eines erfindungsgemäßen Mantel- bzw. Nebenstromgehäuses 28. Dieses umfasst eine Wandung 30, welche mit Verstrebungen, Montagebereichen oder Ähnlichem versehen sein kann. An dem mittleren Bereich des Mantel- bzw. Nebenstromgehäuses schließt sich jeweils ein Flansch 33 bzw. 34 an.

Die Innenseite des Mantel- bzw. Nebenstromgehäuses 28 ist mit einer Deckschicht 29 belegt, welche perforiert ausgebildet ist. Zwischen der Wandung 30 und der Deckschicht 29 ist eine Wabenstruktur 31 eingeklebt, so wie dies in Fig. 3 vereinfacht dargestellt ist. Das Bezugszeichen 32 in Fig. 3 zeigt eine Kantenfüllung zum Verschluss der stirnseitigen Kante der Wabenstruktur.

Bei dem erfindungsgemäßen Reparaturverfahren wird von der Innenseite des Mantel- bzw. Nebenstromgehäuses 28 mechanisch zunächst in einem definierten Bereich die Deckschicht 29 entfernt. Gleichzeitig wird, ebenfalls beispielsweise mittels eines Fräsverfahrens oder Schleifverfahrens, zumindest ein Teil der in dem zu reparierenden Bereich angeordneten Wabenstruktur 31 entfernt.

Durch Applikation eines Laserstrahls wird die innenliegende Oberfläche der Wandung 30 restlos von dem Epoxidharz gereinigt. Nachfolgend ist es möglich, evtl. vorhandene Risse zu verschweißen und den verschweißten Rissbereich wärmezubehandeln. Nachfolgend wird ein passgenau vorgefertigtes Ersatzstück eingeklebt, die Oberfläche der Deckschicht 29 kann dann gegebenenfalls an ihren Übergängen geglättet und angepasst werden.

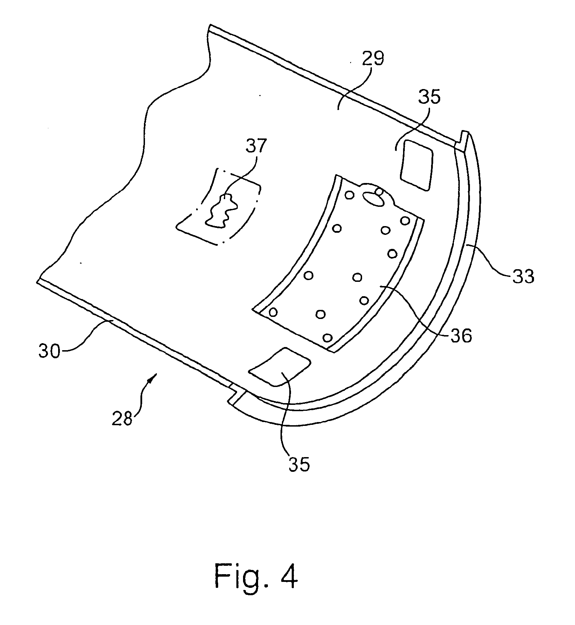

Die Fig. 4 bis 14 zeigen verschiedene Stufen des Reparaturverfahrens zur Verdeutlichung der Erfindung.

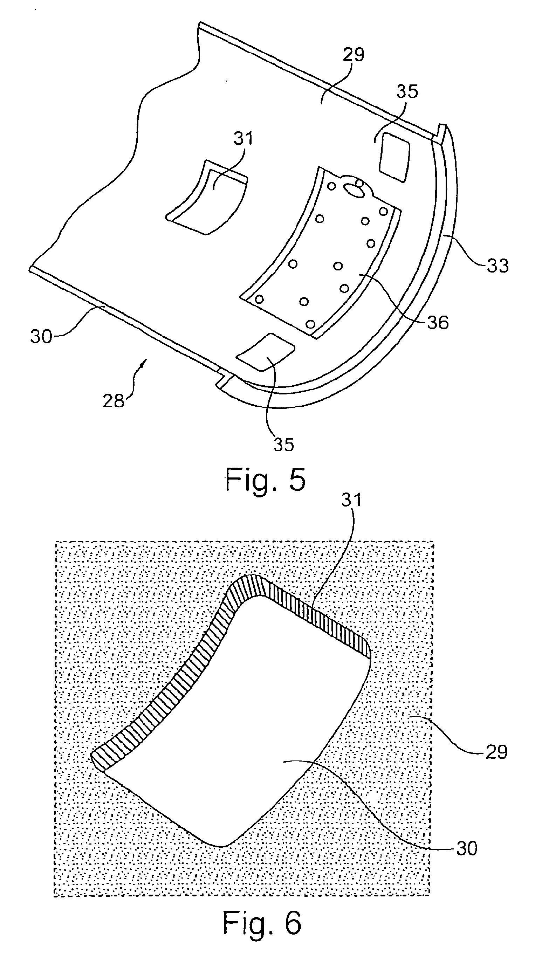

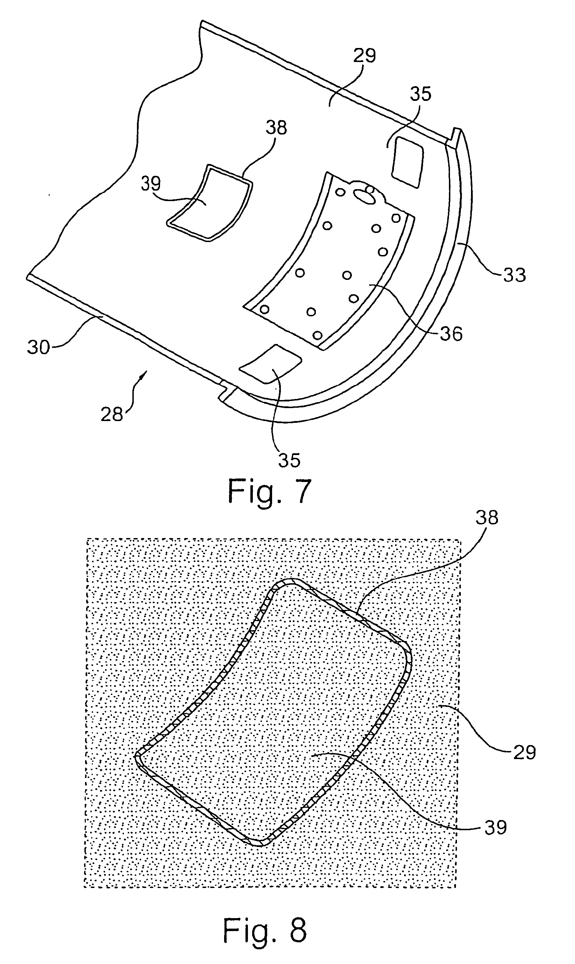

Die Fig. 4 zeigt in einer Teilansicht, analog Fig. 2, einen Teil des Mantel-/Nebenstromgehäuses 28. Dabei ist ein beschädigter Bereich 37 markiert, in welchem entweder die Deckschicht 29 oder auch die Wabenstruktur 31 beschädigt sind. Die Fig. 5 zeigt eine Ansicht, analog Fig. 4, bei welcher der beschädigte Bereich entlang der strichpunktierten Linie von Fig. 4 mechanisch entfernt wurde. Hierdurch ist auch die Wabenstruktur 31 am Rande des entfernten Bereichs zu erkennen. Die Wandung 30 wurde bereits gesäubert. Die Fig. 6 zeigt somit einen Bereich, in welchem die Wabenstruktur 31 sowie die Deckschicht 29 entfernt wurden, um ein passendes Ersatzstück einzusetzen. Die Fig. 7 und 8 zeigen die Situation nach erfolgtem Einsetzen eines Reparaturstücks 39. Das Bezugszeichen 38 zeigt eine Klebefuge bzw. Abdichtung. Diese kann aus einer gummiartigen, elastischen Masse bestehen, beispielsweise aus feuerbeständigem Silikon.

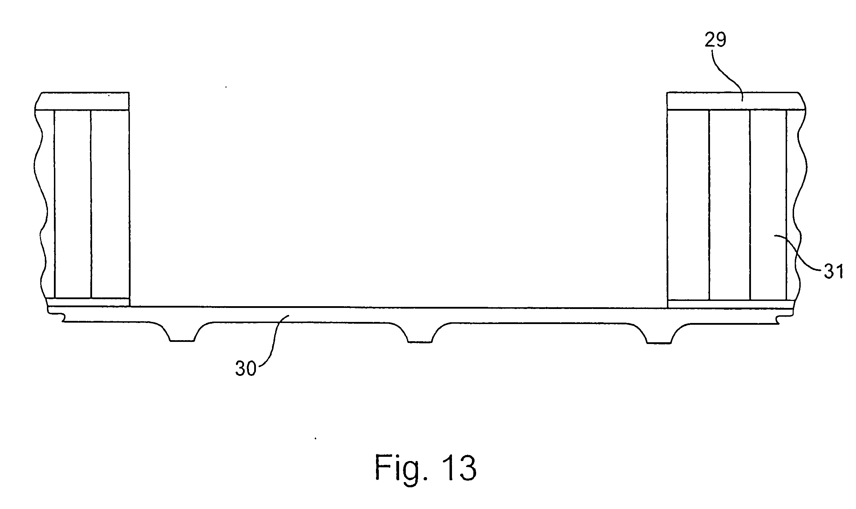

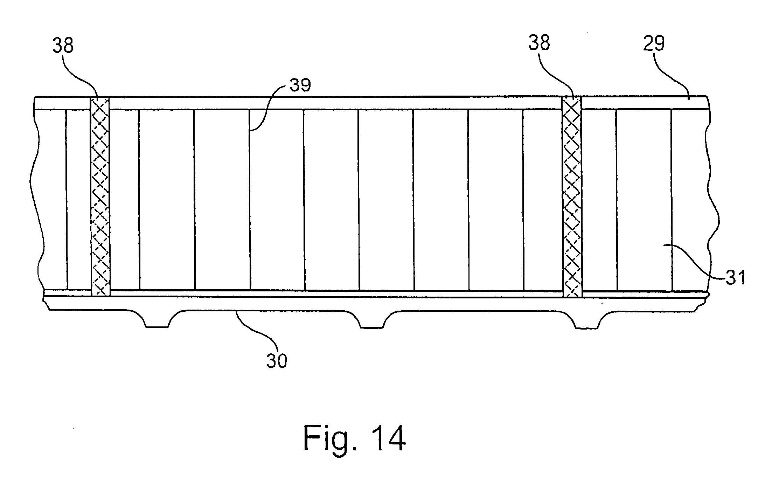

Die Fig. 13 und 14 zeigen die Situationen der Fig. 6 und 8 in der Schnittansicht in vereinfachter Darstellung.

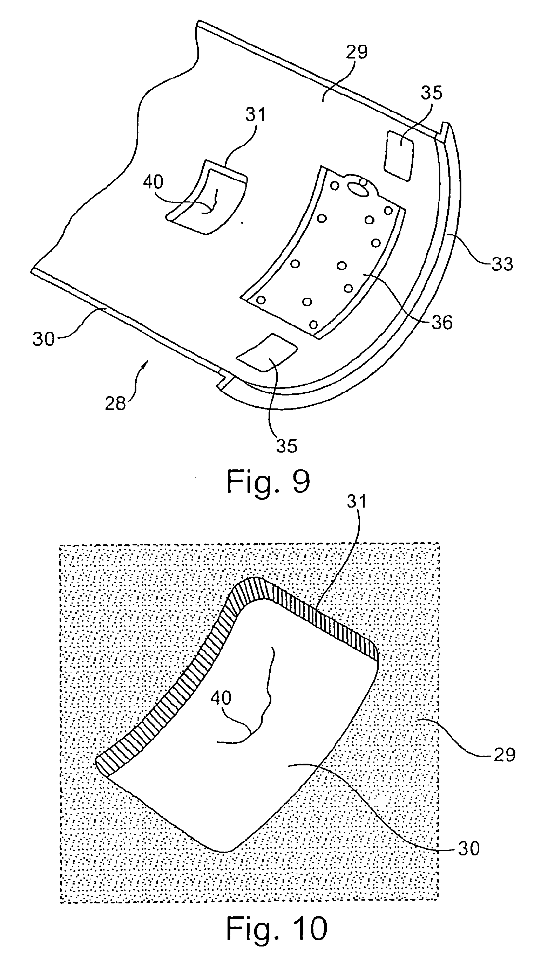

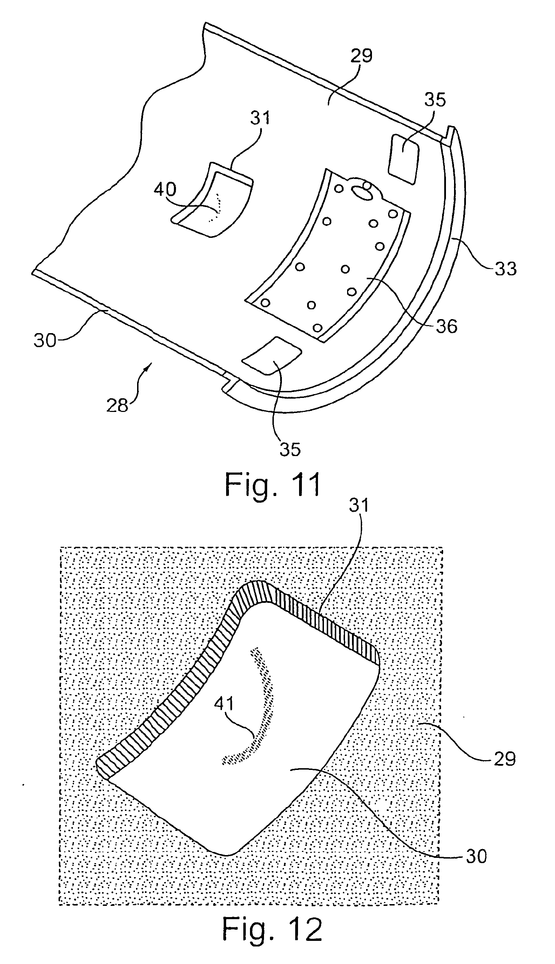

Die Fig. 9 bis 12 zeigen eine Situation, bei welcher entweder zusätzlich zu einem Schaden der Deckschicht 29 und/oder der Wabenstruktur 31 oder unabhängig davon ein Riss 40 in der Wandung 30 aufgetreten ist. Die Fig. 10 zeigt, dass zur Reparatur des Risses 40 ein Teil der Deckschicht 29 sowie der Wabenstruktur 31 entfernt und die Wandung 30, wie beschrieben, gereinigt wurde. Nachfolgend erfolgt eine Reparaturschweißung des Risses. Der geschweißte Riss 41 ist in den Fig. 11 und 12 schematisch dargestellt. Nachfolgend wird, gemäß Fig. 7 und 8, ein Reparaturstück 39 eingesetzt und verklebt.

Das erfindungsgemäße Verfahren ermöglicht somit die Reparatur von dünnwandigen Bauteilen aus Titan mit Hilfe der Lasertechnologie zum Zwecke der Reinigung der Bauteiloberfläche bzw. des Verschweißens von Rissen mit anschließender lokaler Wärmebehandlung zur Reduzierung von Eigenspannungen.

### Bezugszeichenliste:

- 1: Triebwerksachse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Mantel-/Nebenstromgehäuse
- 29: Deckschicht
- 30: Wandung
- 31: Wabenstruktur
- 32: Kantenfüllung
- 33: Flansch
- 34: Flansch
- 35: Wartungsöffnungen
- 36: Aussparung für Einbauteil (Oberflächenkühler)
- 37: beschädigter Bereich
- 38: Klebefuge/Abdichtung
- 39: Reparaturstück
- 40: Riss
- 41: geschweißter Riss

## Patentansprüche

1. Reparaturverfahren für ein Gasturbinengehäuse, welches sandwichartig eine Wandung (30), eine Wabenstruktur (31) sowie eine Deckschicht (29) umfasst, wobei die Wandung (30), die Wabenstruktur (31) und die Deckschicht (29) mittels Epoxidharz verklebt sind, wobei in einem ersten Arbeitsschritt die Deckschicht (29) und die Wabenstruktur (31) in einem zu reparierenden Bereich (35) mechanisch entfernt werden, wobei nachfolgend die Oberfläche der Wandung (30) mittels eines Laserstrahls von dem Epoxidharz gereinigt wird, wobei nach der Reinigung der Oberfläche der Wandung (30) zumindest ein in der Wandung (30) aufgetretener Riss mittels eines Laserstrahls geschlossen wird, wobei bei dem Verschließen des Risses zumindest ein Schweißzusatzwerkstoff zugeführt wird, wobei der Bereich der Wandung (30) nach dem Schießen des Risses mittels eines defokussierten Laserstrahls zur Reduzierung von Eigenspannungen wärmebehandelt wird und wobei in einem weiteren Arbeitsschritt zumindest ein vorgefertigtes Ersatzstück eingeklebt wird.

2. Verfahren nach Anspruch 1, **dadurch gekennzeichnet, dass** die mechanische Entfernung der Deckschicht (29) und der Wabenstruktur (31) mittels eines Fräs- und/oder Schleifverfahrens erfolgt.

3. Verfahren nach einem der Ansprüche 1 oder 2, **dadurch gekennzeichnet, dass** das Reparaturverfahren mittels einer NC-gesteuerten Maschine durchgeführt wird.

## Claims

1. Repair method for a gas-turbine casing, which sandwich-like includes a wall (30), a honeycomb structure (31) and a top layer (29), with the wall (30), the honeycomb structure (31) and the top layer (29) being bonded by means of epoxy resin, where in a first working step the top layer (29) and the honeycomb structure (31) in an area to be repaired (35) are removed mechanically, where afterwards the surface of the wall (30) is cleaned of the epoxy resin by means of a laser beam, where after cleaning of the surface of the wall (30) at least one crack occurred in the wall (30) is closed by means of a laser beam, where at least one filler material is added for closing the crack, where the area of the wall (30) after closing the crack is heat-treated by means of an unfocused laser beam to reduce residual stresses, and where in a further working-step at least one prefabricated replacement piece is bonded in place.

2. Method in accordance with Claim 1, **characterized in that** the top layer (29) and the honeycomb structure (31) are mechanically removed by means of a milling and/or grinding process.

3. Method in accordance with one of the Claims 1 or 2, **characterized in that** the repair method is performed by means of an NC-controlled machine.

## Revendications

1. Procédé de réparation d'un carter de turbine à gaz comprenant en sandwich une paroi (30), une structure en nid d'abeilles (31) ainsi qu'une couche de protection (29), la paroi (30), la structure en nid d'abeilles (31) et la couche de protection (29) étant collées par une résine époxy, sachant que dans une première étape, la couche de protection (29) et la structure en nid d'abeilles (31) sont enlevées mécaniquement dans une zone à réparer (35), qu'ensuite la surface de la paroi (30) est nettoyée de la résine époxy au moyen d'un rayon laser, qu'après le nettoyage de la surface de la paroi (30), au moins une crique apparue dans la paroi (30) est obturée au moyen d'un rayon laser, que lors de l'obturation de la crique, au moins un métal d'apport est ajouté, qu'après l'obturation de la crique, la zone de la paroi (30) est soumise à un traitement thermique au moyen d'un rayon laser défocalisé afin de réduire des contraintes internes, et que dans une étape suivante, au moins un élément de rechange fabriqué au préalable est collé.

2. Procédé selon la revendication n° 1, **caractérisé en ce que** l'enlèvement mécanique de la couche de protection (29) et de la structure en nid d'abeilles (31) est effectué par une opération de fraisage et/ou de meulage.

3. Procédé selon une des revendications n° 1 ou n° 2, **caractérisé en ce que** le procédé de réparation est réalisé au moyen d'une machine à commande numérique.
